# EUROPEAN PATENT APPLICATION

(11) **EP 2 937 262 A2**
(43) Date of publication of application: **28.10.2015**
(21) Application number: 15158068.5
(22) Date of filing: 06.03.2015
(51) Int. Cl.: B62B 7/06, B62B 7/14

(54) **Baby stroller seat**

(30) Priority: 07.03.2014 CN 201420102522 U
(71) Applicant: Dorel France SA, 49309 Cholet Cedex (FR)
(72) Inventor: Lin, Ping-Ching, 330 Taoyuan City (TW); Chang, Chen-Tai, 612 Taibao City, Chiayi County (TW)
(74) Representative: Vidon Brevets & Stratégie

(57) **Abstract**

Baby stroller seat (3), connected to a folding stroller frame (10) through joint components (4), comprising a seat back (31) and a seat base (32), characterised in that said baby stroller seat (3) comprises an actuating mechanism (7) allowing for multiple operation modes of the joint components (4), a first operation mode (730) allowing to release a lock between the stroller seat (3) and folding stroller frame (10), to adjust the tilting angle of the stroller seat (3), and a second operation mode (740) allowing to release a lock between the seat back (31) and the seat base (32), to place the stroller seat (3) in a folding configuration. With this invention, it is possible, through different operating methods of the same actuating mechanism on the joint components (4), both to adjust the angle of the stroller seat (3) and to place the seat (3) in a folding configuration, which means that it is not necessary to remove the seat (3) to fold the stroller, and that it can be stored with the stroller frame (10), eliminating the need for separate storage.

## Description

### Technical domain

This invention relates to a baby stroller seat, more particularly a foldable and reversible baby stroller seat.

### Prior art

Reversible baby stroller seats can meet the different needs of the users, who sometimes want to face the baby and interact with it, and sometimes want to let the baby face towards the front to enjoy the scenery, all with the same stroller.

There are currently many concepts of reversible stroller seats; among these, a known concept is based on a seat which can be removed and then turned before being put back on the frame. However, these seats only take into account removal and reversal, and do allow folding and/or reclining. So it is not possible, or difficult, to have an angle that provides optimum comfort in both the supine and sitting positions; moreover, before the stroller can be folded, the seat has to be removed. The removed seat cannot be folded, and continues to occupy a relatively large space when stored.

An improved concept is disclosed in CN103359146A, providing for a folding mechanism of the seat. However, the seat is not reclining. Other solutions were provided for reclining, for non-foldable seats. In return, there is no simple and easy-to-use solution for controlling reclining and folding of a seat, and the known solutions are not compatible to provide both features.

### Details of the invention

This invention is notably designed to solve the aforementioned issues.

It relates to a baby stroller seat, connected to a folding stroller frame through joint components, comprising a seat back and a seat base, comprising an actuating mechanism allowing for multiple operation modes of at least one of the joint components, a first operation mode allowing to release a first lock in the joint component, to adjust the tilting angle of the stroller seat, and a second operation mode allowing to release a second lock in the joint component, to place the stroller seat in a folding configuration.

Therefore, with a sole actuating mechanism, acting on the same joint components, folding and reclining can be selectively actuated. There is no independent command and control, but an adapted control of the joint component(s), so that they provide for one or the other function, depending on the way the actuating mechanism is move by the user.

In an embodiment, said actuating mechanism comprises an operating component mounted on the seat back and linked to the first and the second locks through a coupling element.

Notably, said actuating mechanism can comprise: a connecting bracket, integrated with the seat back, and forming at least a partial blocking section; the operating component, fixed to the connecting bracket so that it can be actuated; and an upper contact component being mounted on the operating component so that it can move, its front end being equipped with a projecting section, and said projecting section being able to push against or disengage said partial blocking section.

According to an embodiment, operating component comprises a guide frame, which allows the installation of the upper contact component and the limitation of its path and range of motion.

In an embodiment, said actuating mechanism comprising:
a connecting bracket, mounted on the seat back;
an operating component that can be attached to the connecting bracket so that it can be actuated, and linked to at least one of the joint components through a coupling element forming at least a partial blocking section; and an upper contact component that can be mounted on the connecting bracket so that it can move.

For example, said upper contact element is a button.

Said joint components can extend down to form a plug, the folding stroller frame comprising a socket, and said plug being able to detachably connected to the socket, allowing, through the joint components, detachable and angle-adjustable connection of the baby stroller seat to the folding stroller.

Said joint components can comprise a latching mechanism, the seat comprising a locking section for engaging the latching mechanism and affixing the baby stroller seat to the folding stroller frame through the joint components.

Said latching mechanism can comprise:
a button, mounted on a side of the joint components so that it can be actuated, to unlatch the locking between the joint components and the plug; and
a first elastic element, located between the button and the joint components, which allows for the button to return to its original position after having been pressed.

Said joint components can comprise:
a connecting, part of which extends downward to form a plug that can be inserted in the folding stroller frame, one side of said connecting being equipped with an internal sprocket to form a first fastening section;
a lower junction, integrated with the base, equipped on the right and left with an internal sprocket to form a second fastening section, allowing locking with the axis of the joint components; and
an upper junction, integrated with the seat back, allowing a rotatable connection with the connecting base and the axis of the lower junction, equipped on one side with an internal sprocket to form a third fastening section;
a first fastening element, allowing an operational locking between the first fastening section and the second fastening section; and
a second fastening element, allowing an operational locking between the third fastening section and the second fastening section.

Said first fastening element can be equipped with at least a radial protrusion, and said lower junction being equipped with at least one stop pin that is in contact with the protrusion during rotation.

In an embodiment, it also comprises an axis-driving plate located between the upper junction and the second fastening element, said axis-driving plate being driven by the connecting element, said upper junction comprising a thrust ramp in axial direction, and the axis-driving plate comprising a thrusting inclined plane pushing against said thrust ramp.

It can also comprise a second elastic component located between the first fastening element and the connecting base.

This invention not only makes the stroller seat removable and reversible, allowing users to face the baby or turn it to the front, according to their choice, but it also allows the adjusting of the seat angle depending on what is most comfortable for the baby, whether it lay to sleep or sit.

Furthermore, this invention, using the same actuating mechanism in different phases to control the same joint components, allows the adjusting of the reclining angle of the stroller seat, and also to place the baby stroller seat in a folding configuration, so that it is not necessary to remove it to fold the stroller, and it can be stored with the stroller frame, eliminating the need for separate storage.

### Description of the Figures

Figure 1 is a diagram of the connection between one embodiment of the baby stroller seat according to this invention and a folding stroller frame;
Figure 2 is a schematic exploded view in perspective of the actuating mechanism and the joint components of a baby stroller seat according to this invention;
Figure 3 is a diagram of the actuating mechanism of a baby stroller seat according to this invention at the completion of the first operating phase;
Figure 4 is a diagram of the actuating mechanism of a baby stroller seat according to this invention at the completion of the second operating phase;
Figure 5 is a functional diagram of the actuation mechanism of a baby stroller seat according to this invention during the first operating phase;
Figure 6 is a schematic view of the internal cross section of the joint components of the baby stroller seat according to this invention before operation of the actuation mechanism;

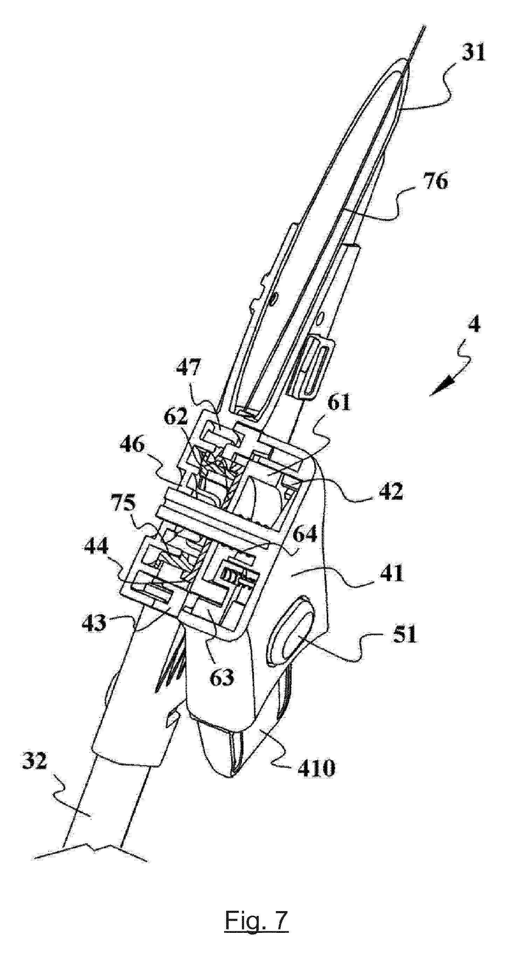

Figure 7 is a schematic view of the internal cross section of the joint components of a baby stroller seat according to this invention after the first operating phase of the actuation mechanism;
Figure 8 is a diagram showing the range of adjustment of the angle of a baby stroller seat according to this invention in the first operating phase of the actuation mechanism;
Figure 9 is a diagram of the actuating mechanism of a baby stroller according to this invention in its second operating phase;
Figure 10 is an internal cross-section diagram of the joint components of a baby stroller seat according to this invention when the user has completed the second operating phase of the actuation mechanism;
Figure 11 is a diagram of the baby stroller seat according to this invention in its folding configuration when the user has completed the second operating phase of the actuation mechanism, and the seat can be removed from the frame;
Figure 12 is a diagram showing the baby stroller seat according to this invention with the folding stroller frame in its folding configuration, showing that it is possible not to separate the seat from the frame;
Figure 13 is a diagram of another embodiment of linking mechanism for a baby stroller seat according to this invention at the end of the first operating phase.

### Key of the main components:

| | | | |
|---|---|---|---|
| 3 | Baby stroller seat | 4 | Joint components |
| 5 | Latching mechanism | 7 | Actuating mechanism |
| 10 | Folding stroller frame | 12 | Plug |
| 13 | Locking section | 30 | Deployed configuration |
| 31 | Seat back | 32 | Base |
| 40 | Folding configuration | 41 | Connecting base |
| 42 | First fastening section | 43 | Lower junction |
| 44 | Second fastening section | 45 | Stop pin |
| 46 | Upper junction | 47 | Third fastening section |
| 51 | Button | 52 | First elastic element |
| 61 | First fastening element | 62 | Second fastening element |
| 63 | Radial protrusion | 64 | Second elastic element |
| 70 | Connecting bracket | 71 | Operating component |
| 72 | Upper contact element | 73 | First position |
| 74 | Second position | 75 | Axis-driving plate |
| 76 | Linking element | 77 | Third elastic element |
| 78 | Thrusting inclined plane | 100 | Deployed usage state |
| 200 | Folded state | 410 | Socket |
| 460 | Thrust ramp | 701 | Local blocking segment |
| 720 | Protruding section | 721 | Guide frame |
| 730 | First operating mode | 740 | Second operating mode |
| D1 | First distance | D2 | Second distance |

### Detailed description of an embodiment

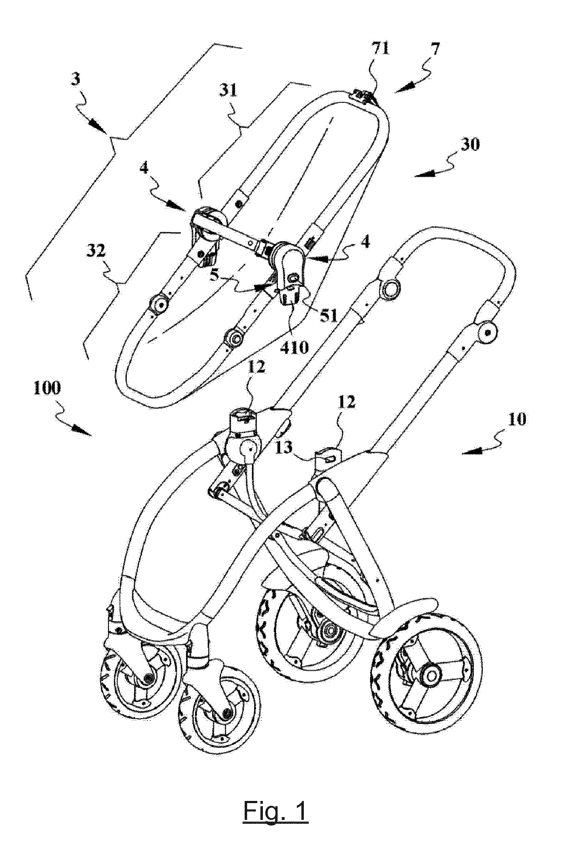

As shown in Figure 1, an embodiment of the baby stroller seat (3) according to this invention can be fastened to a folding stroller frame (10) through joint components, hereafter also called joint components (4), so that it can be reclined. The baby stroller seat (3) can be placed in a deployed configuration (30) as well as in a folded configuration (40) by releasing the joint components (4).

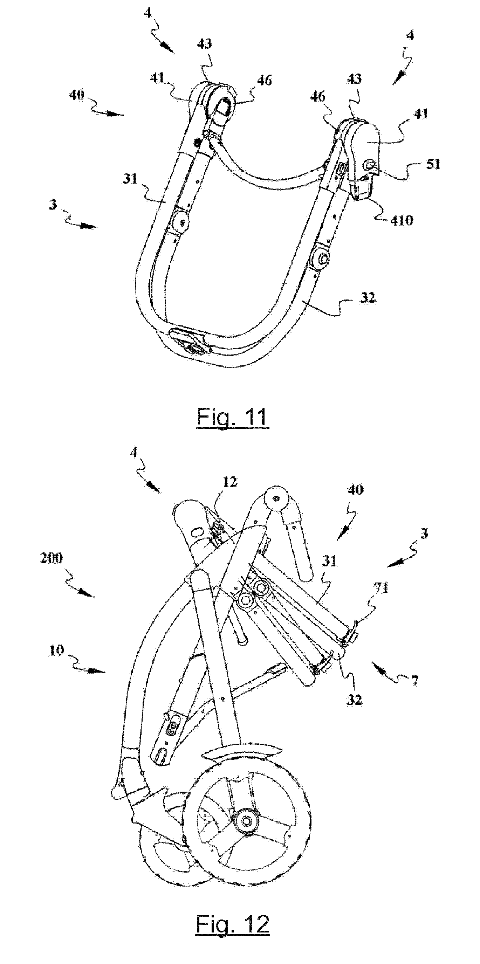

The baby stroller seat (3) is equipped with an actuating mechanism (7), which allows at least two operating modes on the joint components (4):
- completing the first operating mode (730) allows the release of the lock between the baby stroller seat (3) and the folding stroller frame (10), and the adjustment of the tilt angle of the baby stroller seat (3);
- completing the second operating mode (740) allows the release of the lock between the seat (31) and the base (32), so that the baby stroller seat (3) can be placed in the folded configuration (40) shown in Figure 11.

The baby stroller seat (3) can be used with a variety of fixed or folding stroller frames (10). As shown in Figure 1, the joint components (4) of the baby stroller seat (3) extends downward to form a plug (410), which can be fixed to the folding stroller frame (10) in a deployed usage configuration (100), with sockets (12) on the right and left, the plug (410) can be inserted into a socket (12) so as to allow folding; through the joint components (4), the baby stroller seat (3) can be adjusted to the folding stroller frame (10) while allowing for its folding and the adjusting of its tilting angle.

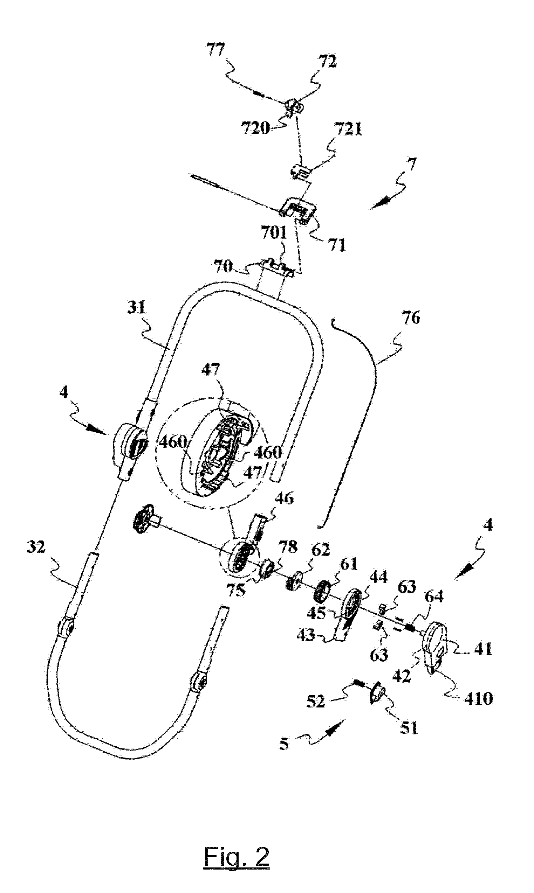

As shown on Figure 2, the joint components (4) of this embodiment is equipped with a latching mechanism (5), which comprises a button (51) and a first elastic element (52); the button (51) is installed on a side of the joint components (4) so that it can be actuated, and is used to release the lock between the joint components (4) and the socket (12); the first elastic element (52) can be placed between the button (51) and the joint components (4) so as to allow the button (51) to automatically get seat back after having been pressed. The socket (12) of the folding stroller frame (10) of Figure 1 can be equipped with a locking section (13) to lock the latching mechanism (5), allowing for the baby stroller seat (3) to be fixed to the folding stroller frame (10) through the joint components (4). As shown on Figure 12, when the folding of the folding stroller frame (10) and of the baby stroller seat (3) are completed, both are in the folded state (200).

The actuating mechanism (7) can include a connecting bracket (70), an actuating element (71) and an upper contact element (72). The connecting bracket (70) can be installed on the upper end of the seat back (31), the actuating element (71) can be fixed on the connecting bracket (70) so that it can be actuated, and linked to the joint components (4) through a linking element (76); when the user performs the first operation mode (730), he/she can keep the actuating element (71) pressed so as to release the first locking section of the joint components (4) and adjust the tilting angle of the baby stroller seat (3).

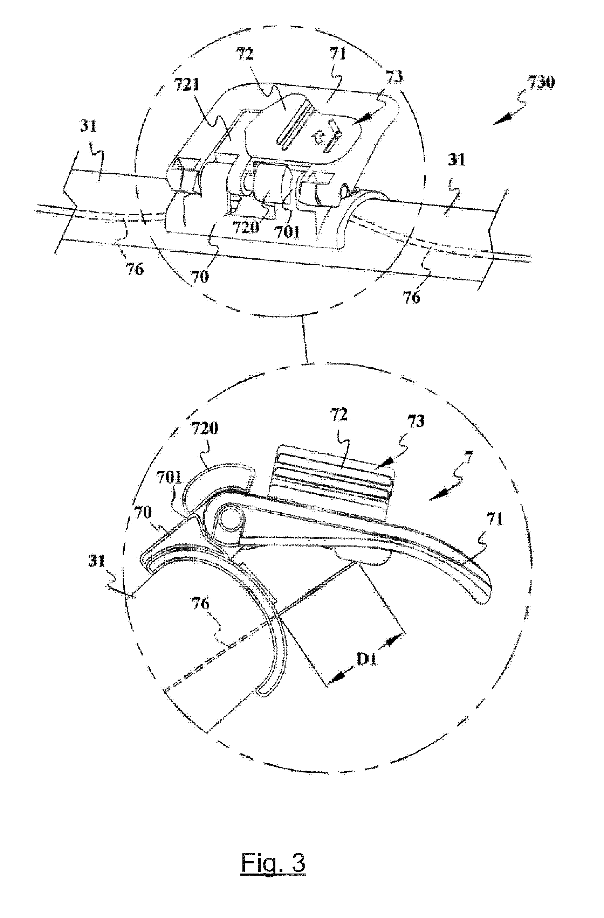

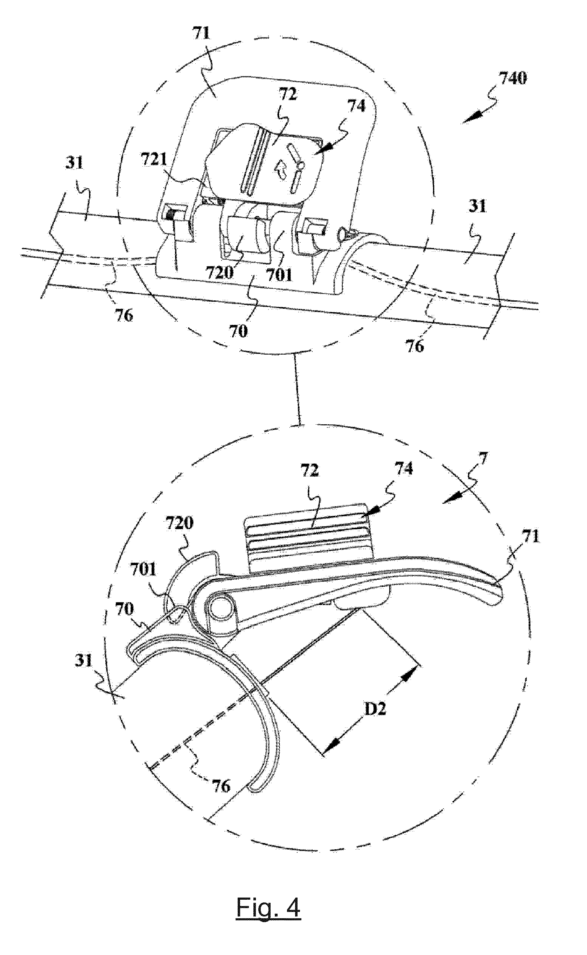

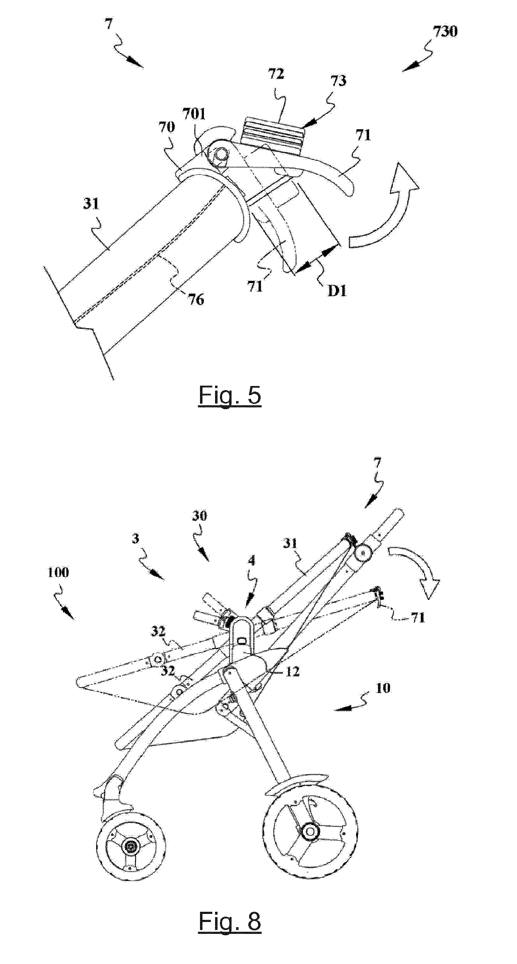

The actuating element (71) can be equipped with a guide groove or a guide so as to limit the path and range of motion of the upper contact element (72). However, as shown in Figures 2 to 5, a guide frame (721) is placed on the actuating element (71), which allows the installation of the upper contact element (72) and the limitation of its path and range of motion; the upper contact element (72) is fixed on the actuating element (71) so that it can move, a third elastic element (77) keeping it in a first position (73). The front end of the upper contact element (72) is equipped with a protruding section (720); when the upper contact element is in the first position (73) at the end of the first operating mode (730), the protruding section (720) comes in contact with the local blocking segment (701) located along the border of the connecting bracket (70), the actuating element (71) can only pull the linking element (76) to a first distance (D1), and by releasing the lock of the joint components (4) between the baby stroller seat (3) and the folding stroller frame (10), the tilting angle of the baby stroller seat (3) can be adjusted. In the second operating mode (740), the end of the upper contact element (72) is in the second position (74), the protruding section (720) is freed from the local blocking segment (701) of the connecting bracket (70), the actuating element (71) can pull the linking element (76) to the second distance (D2), to release the lock of the joint components (4) between the seat back (31) and the base (32) and place the baby stroller seat (3) in folded configuration (40).

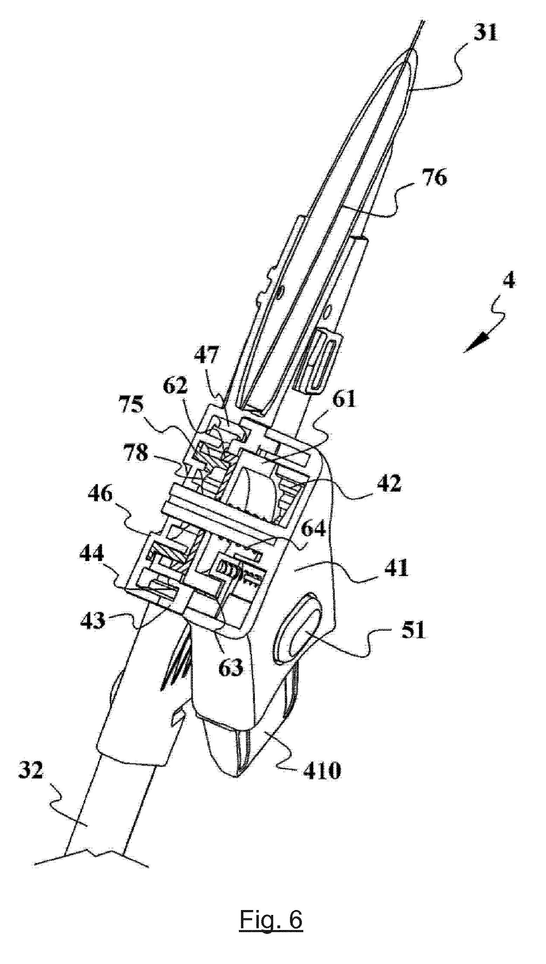

As shown in Figures 2, 6 and 10, the joint components (4) of this embodiment comprises a connecting base (41), a lower junction (43), an upper junction (46), a first fastening element (61) and a second fastening element (62). The connecting base (41) extends downward to form a plug (410) that can be inserted into the folding stroller frame (10), and a side of the connecting base (41) is equipped with an internal sprocket to form a first fastening section (42).

The lower junction (43) is integrated with the base (32), and is equipped on the right and left sides with internal sprockets to form a second fastening section (44) for connection to the connecting base (41) so as to allow rotating.

The upper junction (46) is integrated with the seat back (31), and allows axial connection with the connecting base (41) and the lower junction (43) so as to allow rotating, so that the base (32) and seat back (31) can rotate along the axis formed by their connection, with an internal sprocket which forms a third fastening section (47).

The first fastening element (61) is attached between the first fastening section (42) and the second fastening section (44) so that it can move, and is used to position the lower junction (43) and the base (32) relatively to the connecting base (41); when the user has completed the first operation mode (730), it receives the action of the linking element (76) and releases the lock, allowing the adjusting of the tilt angle of the lower junction (43) and the base (32) relative to the connecting base (41). The first fastening element (61) can be equipped with at least one radial protrusion (63), and the lower junction (43) equipped with at least one stop pin (45) in contact with the radial protrusion (63) during rotation; this way, when the user has completed the first operation mode (730), it is possible to limit the rotating angle of the lower junction (43), thus mitigating the risks of tilting of the baby stroller seat (3).

The second fastening element (62) is attached between the third fastening section (47) and the second fastening section (44) so that it can move, and is used to prevent motion of the base (32) relatively to the seat back (31) and to lock the baby stroller seat (3) in a deployed configuration; in the second operation mode (740), it receives the action of the linking element (76) and releases the lock, the base (32) can rotate relatively to the seat back (31), and this rotation allows the placing of the baby stroller seat (3) in folding configuration (40).

A second elastic element (64) can be installed between the first fastening element (61) and the connecting base (41); this way, prior to the end of the first operation mode (730), the internal section of the joint components (4) can receive from this second elastic element (64) a polarized force to keep the locking of the first fastening element (61) between the first fastening section (42) and the second fastening section (44), and keep the locking of the second fastening element (62) between the second fastening section (44) and the third fastening section (47).

Although the linking element (76) can have any conventional form that allows it to pull on the first fastening element (61) and the second fastening element (62), it is preferable to place an axis-driving plate (75) on the axis that links the upper junction (46) and the second fastening element (62). In the embodiment shown in Figure 2, the axis-driving plate (75) can be connected to the linking element (76) so as to transmit the rotation, the upper junction (46) comprises a thrust ramp (460), and similarly, the axis-driving plate (75) comprises a thrusting inclined plane (78) which abuts the thrust ramp (460). When the actuating mechanism (7) completes the first operating mode (730), the linking element (76) drives the axis-driving plate (75), changing the angle of the first arc of rotation and moving it over a given distance; thus, by simultaneously pushing the second fastening element (62) and the first fastening element (61), the first fastening element (61) fully enters the first fastening section (42) and fully exits the second fastening section (44), allowing the rotation of the lower junction (43) relatively to the junctions seat (41), and the adjusting of the tilting angle of the baby stroller seat (3).

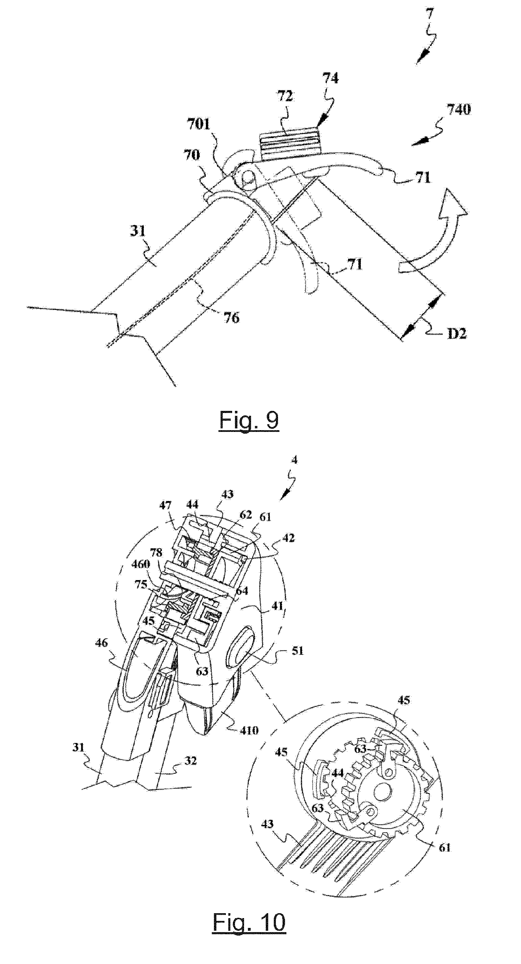

As shown in Figures 9 and 10, when the user completes the second operating mode (740), the linking element (76) moved over a second distance (D2), and resulting from this, the axis-driving plate (75) accompanies the axis rotation, and the second fastening element (62) moves away from the third fastening section (47) to allow the lower junction (43) to freely rotate relatively to the upper junction (46), and the baby stroller seat (3) can be placed in the folding configuration (40), as pictured in Figure 11; at the same time, the second fastening element (62) pulls on the first fastening element (61), which results in that the radial protrusion (63) moves out of the reach of the stop pin (45), and the baby stroller seat (3), already in folding configuration (40) can be rotated and placed into the folding stroller frame (10), resulting in the folded state (200) as pictured in Figure 12.

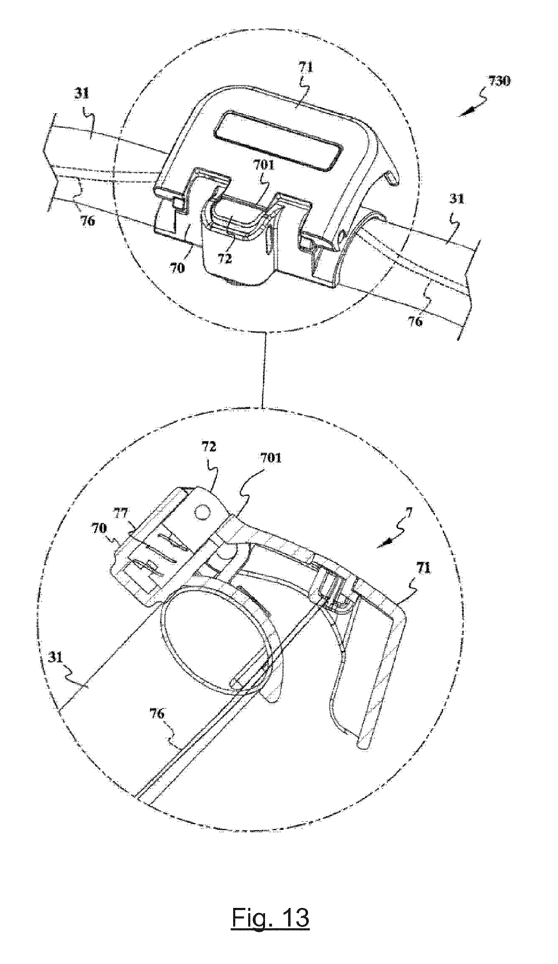

In addition to the embodiment described supra, alternative construction in which the operation process of an actuating element (71) is divided into two modes (the first being the adjustment of the tilting angle of the seat, the second being the folding of the seat) to obtain two different effects can easily be imagined. Figure 13 shows another embodiment of the operation mechanism of this invention, in which the actuating mechanism (7) can comprise a connecting bracket (70), an actuating element (71) and an upper contact element (72). The connecting bracket (70) can be installed on the upper end of the seat back (31), the actuating element (71) mounted on the connecting bracket (70) so that it can be actuated, and is connected to the joint components (4) through a linking element (76), to form at least a local blocking segment (701), the upper contact element (72) is mounted on the connecting bracket (70) so that it can move, said upper contact element (72) can be implemented in the form of a button; it is possible to take advantage of its size or shape, and it is possible to place it inside the connecting bracket (70) so that it can move, and to keep it pressed with a third elastic element (77), for example a spring. During the first operation mode (730), the user can keep the actuating element (71) pressed to release the first lock of the joint components (4) and adjust the tilting angle of the baby stroller seat (3); the upper contact element (72) is then in contact with the local blocking segment (701) located on top of the actuating element (71), and the actuating element (71) cannot advance further; during the second operation mode (740), the upper contact element (72) is pressed and does not come into contact with the local blocking segment (701), allowing for the actuating element (71) to advance the linking element (76) to the second distance (D2), thus unlocking the joint components (4) in relation to the seat back (31) and the base (32), which allows for the baby stroller seat (3) to be put in folding configuration (40).

## Claims

1. Baby stroller seat, adapted to be connected to a folding stroller frame (10) through joint components (4), the seat comprising a seat back (31) and a seat base (32), **characterised in that** said baby stroller seat comprises an actuating mechanism (7) allowing for at least two operation modes of at least one of the joint components (4):
- a first operation mode allowing to release a first lock in the joint component (4), to adjust the tilting angle of the stroller seat (3), and
- a second operation mode allowing to release a second lock in the joint component (4), to place the stroller seat (3) in a folding configuration (40).

2. Baby stroller seat according to claim 1, **characterized in that** said actuating mechanism (7) comprises an operating component (71) mounted on the seat back (31) and linked to the first and the second locks through a coupling element (76).

3. Baby stroller seat (3) according to claim 2, **characterised in that** it comprises:
- a connecting bracket (70), integrated with the seat back (31), and forming a at least partial blocking section,
- the operating component (71), fixed to the connecting bracket (70) so that it can be actuated; and
- an upper contact component (72) movably mounted on the operating component (71).

4. Baby stroller seat according to claim 3, **characterised in that** the front end of said upper contact component (72) is equipped with a projecting section, and said projecting section being able to push against or disengage said partial blocking section.

5. Baby stroller seat according to claim 2, **characterised in that** said operating component (71) comprises a guide frame (721) adapted for the installation of the upper contact component (72) and for the limitation of the moving path and range of said upper contact component (72).

6. Baby stroller seat according to claim 2, **characterised in that** said actuating mechanism (7) comprises:
- a connecting bracket (70), mounted on the seat back (31);
- an operating component (71), attached to the connecting bracket (70) so that it can be actuated, and linked to at least one of the joint components (4) through a coupling element (76) forming a at least partial blocking section; and
- an upper contact component (72), mounted on the connecting bracket (71) so that it can move.

7. Baby stroller seat according to claim 6, **characterised in that** said upper contact element (72) is a button.

8. Baby stroller seat according to claim 1, **characterised in that** said joint components (4) extends down to form a plug (410), adapted to cooperate with a socket (12) of the folding stroller frame (10).

9. Baby stroller seat according to claim 8, **characterised in that** said plug (410) is detachably connected to the socket (12), allowing, through the joint components (4), detachable and angle-adjustable connection of the baby stroller seat (3) to the folding stroller frame (10).

10. Baby stroller seat according to claim 9, **characterised in that** said joint components (4) comprises a latching mechanism (5), the socket (12) comprising a locking section (13) for engaging the latching mechanism (5) and affixing the baby stroller seat (3) to the folding stroller frame (10) through the joint components (4).

11. Baby stroller seat according to claim 10, **characterised in that** said latching mechanism (5) comprises:
- a button (51), mounted on a side of the joint components (4) so that it can be actuated, to unlatch the locking between the joint components (4) and the plug (410); and
- a first elastic element (52), located between the button (51) and the joint components (4), which allows for the button (51) to return to its original position after having been pressed.

12. Baby stroller seat according to claim 1, **characterised in that** said joint components (4) comprises:
- a connecting base (41), part of which extends downward to form a plug (410) that can be inserted in the folding stroller frame (10), one side of said connecting base (41) being equipped with an internal sprocket to form a first fastening section (42);
- a lower junction (43), integrated with the seat base (32), equipped on the right and left with an internal sprocket to form a second fastening section (44), allowing locking with the axis of the joint components (4); and
- an upper junction (46), integrated with the seat back (31), allowing a rotatable connection with the connecting base (41) and the axis of the lower junction (43), equipped on one side with an internal sprocket to form a third fastening section (47);
- a first fastening element (61), allowing an operational locking between the first fastening section (42) and the second fastening section (44); and
- a second fastening element (62), allowing an operational locking between the third fastening section (47) and the second fastening section (44).

13. Baby stroller seat according to claim 12, **characterised in that** said first fastening element (61) is equipped with at least a radial protrusion (63), and said lower junction (43) is equipped with at least one stop pin (45) that is in contact with the protrusion (63) during rotation.

14. Baby stroller seat according to claim 13, **characterised in that** it also comprises an axis-driving plate (75) located between the upper junction (46) and the second fastening element (62), said axis-driving plate (75) being driven by a connecting element (76), said upper junction (46) comprising a thrust ramp (460) in axial direction, and the axis-driving plate comprising a thrusting inclined plane (78) pushing against said thrust ramp (460).

15. Baby stroller according to claim 12, **characterised in that** it also comprises a second elastic component (64) located between the first fastening element (61) and the connecting base (41).
